(19) Europäisches Patentamt / European Patent Office / Office européen des brevets

(11) **EP 2 699 819 B1**

(12) **FASCICULE DE BREVET EUROPEEN**

(45) Date de publication et mention
de la délivrance du brevet:
**11.10.2017 Bulletin 2017/41**

(21) Numéro de dépôt: **12722408.7**

(22) Date de dépôt: **12.04.2012**

(51) Int Cl.:
*F16D 63/00* *(2006.01)* *F16D 65/14* *(2006.01)*
*F16H 35/10* *(2006.01)*

(86) Numéro de dépôt international:
**PCT/FR2012/050800**

(87) Numéro de publication internationale:
**WO 2012/143656 (26.10.2012 Gazette 2012/43)**

(54) **DISPOSITIF DE PROTECTION MECANIQUE**

MECHANISCHE SCHUTZVORRICHTUNG

MECHANICAL PROTECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.04.2011 FR 1153523**

(43) Date de publication de la demande:
**26.02.2014 Bulletin 2014/09**

(73) Titulaire: **Safran Helicopter Engines
64510 Bordes (FR)**

(72) Inventeurs:
• **DESCUBES, Olivier, Pierre
F-64800 Nay (FR)**
• **BEDRINE, Olivier
F-64290 Bosdarros (FR)**
• **LADEVEZE, Isabelle, Germaine, Claude
F-64420 Nousty (FR)**
• **PY, Jean-Michel, Pierre, Claude
F-64800 Pardies-Pietat (FR)**

(74) Mandataire: **Calvo de Nó, Rodrigo et al
Cabinet Beau de Loménie
158, rue de l'Université
75340 Paris Cedex 07 (FR)**

(56) Documents cités:
**FR-A- 1 347 634 GB-A- 1 589 378
US-A- 4 313 712 US-A1- 2009 139 806
US-A1- 2010 219 015**

## Description

La présente invention concerne un dispositif de protection mécanique, et en particulier un dispositif de protection mécanique contre une survitesse.

Afin de protéger des dispositifs contre les surcharges mécaniques, la personne du métier a longtemps connu des dispositifs de protection dans lesquels un élément d'une chaîne de transmission mécanique est sacrifié en cas de surcharge, de manière à éviter des dommages plus graves en aval de cette chaîne. Dans la plupart des cas, ces dispositifs sont destinés à offrir une protection contre les forces ou couples excessifs. Par exemple, les brevets américains US 4,313,712 et US 6,042,292 divulguent des dispositifs de protection mécanique contre des efforts radiaux excessifs sur des arbres rotatifs. Toutefois, ces dispositifs sacrificiels connus présentent l'inconvénient de ne pas servir comme protection contre les survitesses. Or, dans beaucoup de situations, une survitesse peut causer autant ou plus de dommage qu'une force ou couple excessifs. En particulier, dans certaines machines comme par exemple les turbomoteurs, une survitesse peut causer un phénomène de retour positif, provoquant une augmentation progressive de la vitesse jusqu'à la destruction de la machine.

Dans la demande internationale de brevet WO 2008/101876, un dispositif de protection mécanique a été divulgué comportant un arbre de transmission avec une fréquence de résonance en flexion correspondant à une survitesse de rotation prédéterminée de l'arbre de transmission. Dans ce dispositif, la résonance en flexion de l'arbre de transmission est destinée à absorber la puissance transmise en rotation par l'arbre de transmission, empêchant ainsi le dépassement de cette survitesse. Ceci n'est toutefois possible que si la puissance disponible est limitée et l'amortissement de l'arbre en flexion suffit à dissiper toute la puissance disponible. Si la puissance disponible peut augmenter avec le couple de résistance, la résonance en flexion de l'arbre ne suffira pas à la neutraliser.

Le brevet FR-A-1347634 divulgue un arbre de transmission avec un élément frangible sous un surcharge en torsion, qui serve comme protection contre les survitesses.

La présente invention vise à proposer un dispositif de protection mécanique comportant un arbre de transmission avec un élément frangible sous une surcharge en torsion qui permette de protéger effectivement un ensemble mécanique contre une survitesse.

Dans au moins un mode de réalisation, ce but est atteint grâce au fait que le dispositif comporte, au moins, un organe mobile, solidaire de l'arbre de transmission en rotation autour d'un axe principal et apte à se déplacer radialement vers l'extérieur par rapport à l'axe principal, d'une première position à une deuxième position, ainsi qu'un ressort de contrainte de l'organe mobile vers la première position, et une butée tangentielle apte à arrêter la rotation de l'organe mobile autour de l'axe principal quand l'organe mobile est dans la deuxième position. L'organe mobile et le ressort sont calibrés pour ce que, à partir d'une vitesse angulaire de déclenchement prédéterminée, l'organe mobile se déplace de la première à la deuxième position sous l'effet d'une force centrifuge supérieure à une précontrainte du ressort.

Ainsi, le dispositif fonctionne selon deux principes : un principe de détection de dépassement d'un seuil de vitesse basé sur l'exploitation de l'effet centrifuge et de la précontrainte d'un ressort, et un principe d'arrêt basé sur la rupture d'une section frangible suite au déclenchement de la détection du dépassement d'un seuil de vitesse. Grâce à ces dispositions, la transmission de puissance par l'arbre mécanique peut être efficacement interrompue en cas de survitesse, évitant ainsi des dommages plus graves dans l'ensemble mécanique. L'impact de l'organe mobile contre la butée tangentielle provoque un arrêt de l'arbre de transmission et la rupture immédiate de la section frangible de l'arbre de transmission, et ceci de manière largement indépendante du couple transmis par l'arbre de transmission avant l'impact. La précontrainte du ressort évite le déplacement radial de l'organe mobile tant que le seuil de vitesse n'est pas atteint, ce qui présente l'avantage de limiter l'usure.

La butée tangentielle peut notamment être une butée fixe. L'organe mobile peut être apte à se déplacer de la première position à la deuxième position par translation, par exemple par glissement dans un guide radial, ou par pivotement.

L'invention concerne également une machine comportant un arbre moteur, une pompe d'alimentation, en particulier une pompe d'alimentation en carburant, et un dispositif de protection mécanique suivant l'invention, dans lequel l'arbre de transmission connecte l'arbre moteur à la pompe d'alimentation pour l'actionnement de la pompe d'alimentation. Ainsi, la rupture de l'arbre de transmission en cas de survitesse de l'arbre moteur interrompra l'actionnement de la pompe d'alimentation, ayant pour effet l'arrêt de la machine.

Selon un aspect supplémentaire, ledit arbre moteur est couplé à une turbine configurée pour être actionnée par l'expansion d'un fluide chauffé par combustion du carburant fourni par la pompe d'alimentation. Ainsi, en cas de survitesse de la turbine, et donc de l'arbre moteur et de l'arbre de transmission, la rupture de l'arbre de transmission interrompra l'alimentation en carburant de la machine, provoquant l'arrêt de la turbine. La combustion peut être interne ou externe. Ainsi, la turbine peut être, par exemple, une turbine à gaz actionnée directement par les gaz de combustion du carburant.

L'invention concerne également un véhicule, en particulier un aéronef, comportant une machine suivant l'invention. Par exemple, la machine peut être un turbomoteur d'aéronef à voilure tournante.

L'invention concerne également un procédé de protection mécanique, lequel, dans au moins un mode de réalisation, comporte les étapes suivantes :

déclenchement, à une certaine vitesse angulaire d'un arbre de transmission, du déplacement d'un organe mobile d'une première position à une deuxième position plus extérieure radialement par rapport à l'arbre de transmission, sous l'effet d'une force centrifuge et contre une précontrainte élastique d'un ressort de contrainte de l'organe mobile en sens opposé à la force centrifuge, l'organe mobile tournant avec l'arbre de transmission ;

contact de l'organe mobile en rotation, dans la deuxième position, contre une butée tangentielle ; et rupture d'un élément frangible de l'arbre de transmission sous une surcharge en torsion causée par le contact de l'organe mobile contre la butée tangentielle.

L'invention sera bien comprise et ses avantages apparaîtront mieux, à la lecture de la description détaillée qui suit, de trois modes de réalisation représentés à titre d'exemples non limitatifs. La description se réfère aux dessins annexés sur lesquels :

- la figure 1A est une vue en coupe longitudinale d'un dispositif de protection mécanique suivant un premier mode de réalisation ;
- les figures 1B et 1C sont des vues en coupe transversale du dispositif de la figure 1A en deux positions différentes d'un organe mobile ;
- la figure 2 est une vue en coupe longitudinale d'un dispositif de protection mécanique suivant un deuxième mode de réalisation ;
- la figure 3A est une vue en coupe longitudinale d'un dispositif de protection mécanique suivant un troisième mode de réalisation ;
- la figure 3B est une vue de détail du dispositif de la figure 3A avec un organe mobile dans une deuxième position ;
- la figure 4A est une illustration schématique d'un turbomoteur comportant le dispositif de protection mécanique des figures 1A à 1C ; et
- la figure 4B est une illustration schématique du turbomoteur de la figure 4A lors de la rupture de l'arbre de transmission du dispositif de protection mécanique.

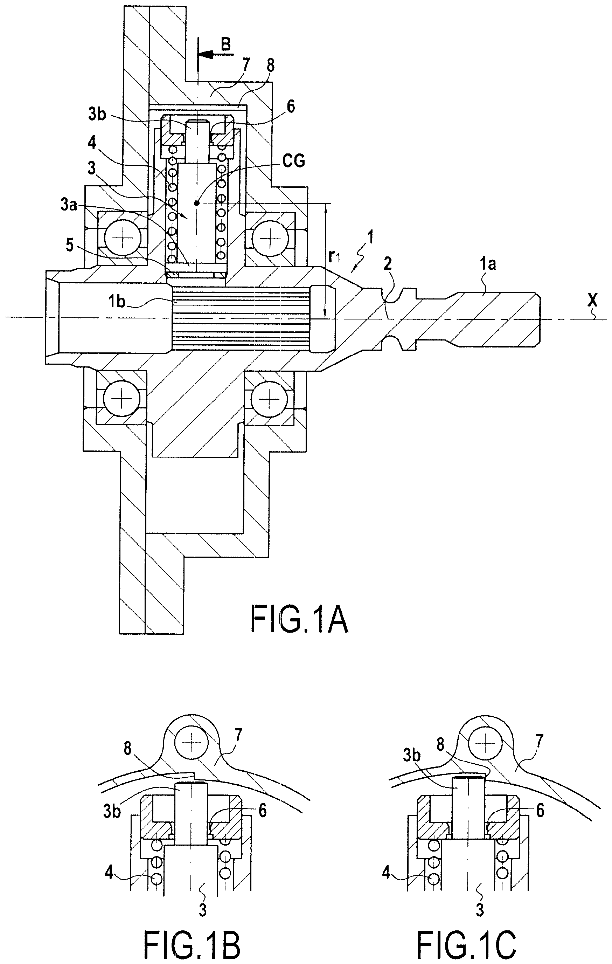

Un dispositif de protection mécanique suivant un premier mode de réalisation est illustré sur les figures 1A et 1B. Ce dispositif comporte un arbre de transmission 1 avec un premier organe de transmission 1a pour coupler l'arbre de transmission à un actionneur (non illustré), et un deuxième organe de transmission 1b pour coupler l'arbre de transmission 1 à un dispositif à actionner, une section réduite formant un élément frangible 2, et un organe mobile 3 reçu dans un guide radial 9 intégré dans l'arbre de transmission 1 de manière à être solidaire en rotation de l'arbre de transmission 1 tout en restant mobile en direction radiale. Un ressort 4 précontraint plaque une extrémité proximale 3a de l'organe mobile 3 contre une butée radiale interne 5 en direction de l'axe de rotation X de l'arbre de transmission 1, tandis qu'une ouverture radiale 6 permet le passage d'une extrémité distale 3b de l'organe mobile 3 vers l'extérieur. Comme illustré en particulier sur la figure 1B, une platine fixe 7 est installée autour de l'arbre de transmission 1 à la position axiale de l'organe mobile 3. Dans le mode de réalisation illustré sur la figure 1B, cette platine fixe 7 comporte une butée 8 en direction tangentielle à la rotation de l'extrémité distale 3b de l'organe mobile 3 autour de l'axe X.

En fonctionnement, la rotation de l'arbre de transmission 1 provoque une force centrifuge $F_c$ égale au produit de la masse m de l'organe mobile 3 par la position radiale r du centre de gravité CG de l'organe mobile 3 et le carré de la vitesse angulaire $\omega$ de l'arbre de transmission 1. A la position radiale initiale de l'organe mobile 3 illustrée sur la figure 1A, avec l'extrémité proximale 3a en contact avec la butée interne 5, et le centre de gravité CG de l'organe mobile 3 dans une première position radiale $r_1$, le ressort 4 exerce une précontrainte élastique $F_1$ en direction radiale vers l'axe de rotation X. En conséquence, tant que la force centrifuge $F_c$ ne dépasse pas la précontrainte $F_1$ opposée, l'extrémité proximale 3a de l'organe mobile 3 restera plaquée contre la butée radiale interne 5 et le centre de gravité CG de l'organe mobile 3 restera à la première position radiale $r_1$. Toutefois, à partir d'une vitesse angulaire $\omega_1$, la force centrifuge $F_c$ devient supérieure à la précontrainte $F_1$, et déplace l'organe mobile 3 vers l'extérieur. Selon la loi de Hooke, la force élastique $F_e$ peut être approximée par la formule suivante :

$$F_e = k(r - r_1) + F_1$$

dans laquelle k est le coefficient de raideur du ressort 4.
La force centrifuge, de son côté, suit la formule suivante :

$$F_c = m\omega^2 r$$

dans laquelle m est la masse de l'organe mobile 3, $\omega$ la vitesse angulaire de l'arbre de transmission, et r la distance radiale du centre de gravité du doigt 3 à l'axe de rotation X.
En conséquence, la vitesse angulaire $\omega_1$ de déclenchement du dispositif de protection mécanique peut être calibrée suivant la formule suivante :

$$\omega_1 = \sqrt{\frac{F_1}{mr_1}}$$

Et, pour obtenir une accélération radiale de l'organe mobile 3 vers l'extérieur suite au déclenchement du dispositif de protection, le coefficient de raideur k sera inférieur au quotient de la précontrainte $F_1$ divisée par la position radiale initiale $r_1$ :

$$k < \frac{F_1}{r_1}$$

Ainsi, à la vitesse angulaire de déclenchement $\omega_1$, la force centrifuge exercée sur l'organe mobile dépassera la précontrainte du ressort $F_1$ et augmentera plus rapidement que la réaction du ressort lors du déplacement radial de l'organe mobile vers l'extérieur.

Afin d'éviter un déclenchement intempestif du dispositif de protection mécanique, il convent aussi de le dimensionner de telle manière qu'il ne puisse pas être déclenché par des vibrations ou autres accélérations externes. Pour cela la distance radiale $r_1$ peut correspondre à l'équation :

$$r_1 \geq \frac{K\gamma}{\omega_n^2}$$

dans laquelle $\gamma$ représente une accélération externe prédéterminée, K un coefficient de sécurité, et $\omega_n$ une vitesse angulaire nominale de l'arbre de transmission inférieure à la vitesse angulaire de déclenchement.

La masse m et position initiale $r_1$ de l'organe mobile 3 et la raideur k et précontrainte $F_1$ du ressort 4 peuvent donc être calibrées sur base de ces formules pour déclencher le dispositif de protection à une vitesse critique $\omega_1$, dépassant d'une survitesse $\Delta\omega$ prédéterminée la vitesse nominale $\omega_n$ de l'arbre de transmission 1. Suite à ce déclenchement, l'organe mobile 3 se déplace vers une deuxième position située radialement à l'extérieur de la première.

Après le déplacement de l'organe mobile 3 jusqu'à la deuxième position, l'arbre de transmission 1 peut effectuer un maximum d'un tour complet avant que l'extrémité distale 3b de l'organe mobile 3 vienne frapper dans sa rotation une butée tangentielle 8 de l'élément périphérique fixe 7, comme illustré sur la figure 1C. L'impact de l'extrémité distale 3b de l'organe mobile 3 contre la butée tangentielle 8 arrête d'un coup la rotation de l'arbre de transmission 1, générant ainsi une surcharge instantanée en torsion de l'arbre de transmission 1 et la rupture de l'élément frangible 2, disposé axialement entre le premier organe d'accouplement 1a et l'organe mobile 3. Ainsi, l'arbre de transmission 1 fonctionne comme organe sacrificiel de protection mécanique, non pas uniquement contre un excès de force ou de couple, mais contre un excès de vitesse $\Delta\omega$.

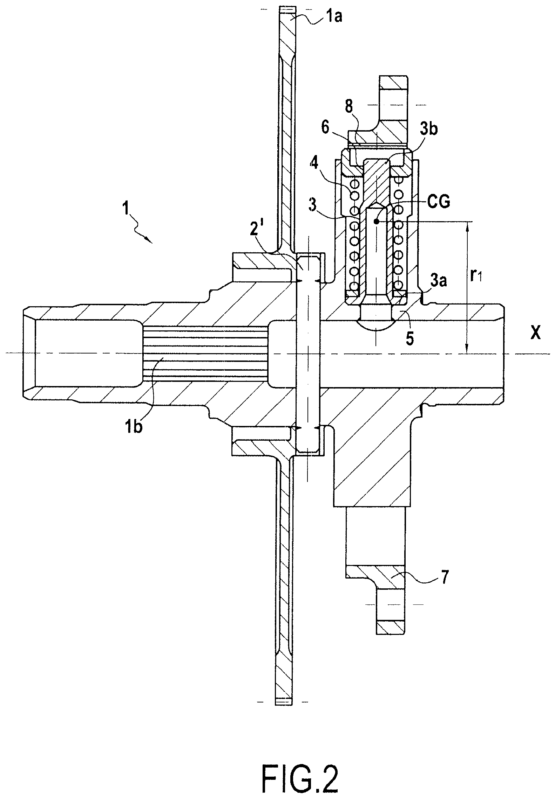

Dans un deuxième mode de réalisation, illustré sur la figure 2, l'élément frangible 2 n'est pas formé par une section réduite de l'arbre de transmission 1, mais par une goupille frangible par cisaillement, reliant deux segments séparés 1a et 1b de l'arbre de transmission 1.

Les autres éléments de dispositif de protection mécanique suivant ce deuxième mode de réalisation sont sensiblement équivalents fonctionnellement à ceux du premier mode de réalisation, et reçoivent les mêmes chiffres de référence.

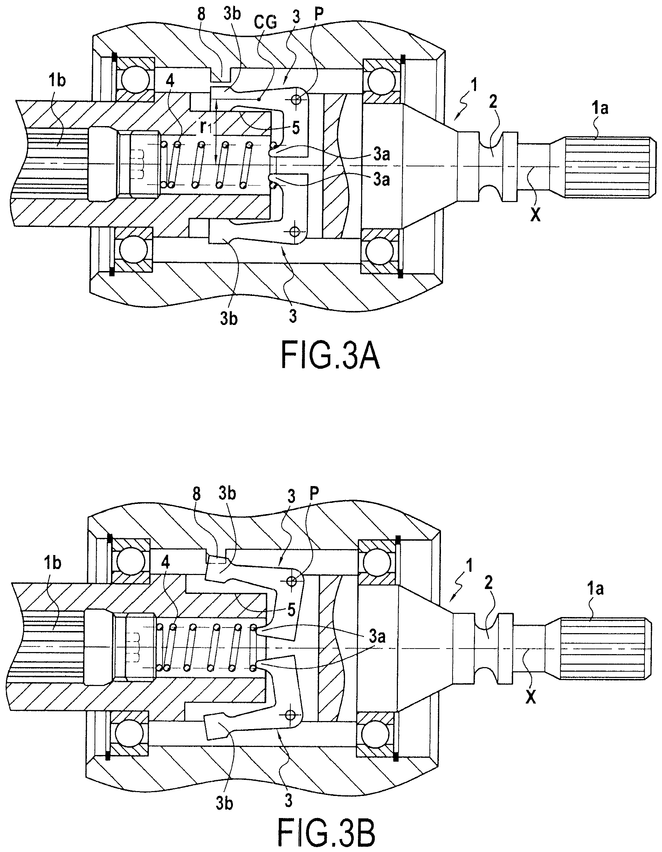

Bien que dans ces premier et deuxième modes de réalisation la force centrifuge déplace l'organe mobile 3 radialement par glissement dans un guide radial 9 intégré à l'arbre de transmission de puissance 1, des alternatives peuvent être envisagées. Ainsi, dans un troisième mode de réalisation illustré sur les figures 3A et 3B, et prenant une forme analogue à un régulateur de Watt à masselottes pivotantes, le dispositif de protection mécanique comporte deux organes mobiles 3, chacun monté de manière à pivoter dans un plan longitudinal par rapport à l'arbre de transmission 1. Les deux organes mobiles 3 présentent une forme en L, avec l'extrémité proximale 3a dans un premier segment, l'extrémité distale 3b dans un deuxième segment et le pivot P dans un angle, sensiblement droit, entre le premier et le deuxième segment. Ainsi, dans la première position, illustrée sur la figure 3A, le premier segment de chaque organe mobile est orienté en direction sensiblement radiale et le deuxième segment en direction sensiblement longitudinale, ce qui permet d'arranger le ressort 4 en direction longitudinale dans l'arbre de transmission 1. Ce ressort 4 est précontraint de manière à plaquer, dans cette première position, une face interne de l'extrémité distale 3b de chaque organe mobile 3 contre une butée radiale interne 5 en direction de l'axe de rotation X de l'arbre de transmission 1.

En fonctionnement, la rotation de l'arbre de transmission 1 de ce troisième mode de réalisation provoque une force centrifuge $F_c$ sur chaque organe mobile 3 égale au produit de la masse m de l'organe mobile 3 par la position radiale r du centre de gravité CG de l'organe mobile 3 et le carré de la vitesse angulaire $\omega$ de l'arbre de transmission 1. Cette force centrifuge $F_c$ provoque un couple de pivotement $M_c$ égal au produit de la force centrifuge par la distance longitudinale L du centre de gravité CG au pivot P. A la position initiale des organes mobiles 3 illustrée sur la figure 3A, avec chaque organe mobile 3 en contact avec la butée interne 5, et le centre de gravité CG de chaque organe mobile 3 dans une première position radiale $r_1$, le ressort 4 exerce une précontrainte élastique $F_1$ en direction de l'axe de rotation X sur les deux organes mobiles 3. Cette force de précontrainte élastique $F_1$ provoque, sur chaque organe mobile 3, un couple de pivotement $M_1$ opposé au couple de pivotement centrifuge $M_c$. En conséquence, tant que le couple de pivotement centrifuge $M_c$ ne dépasse pas le couple de pivotement opposé $M_1$ généré par la précontrainte $F_1$, l'extrémité distale 3b de l'organe mobile 3 restera plaquée contre la butée radiale interne 5 et le centre de gravité CG de l'organe mobile 3 restera à la première position radiale $r_1$. Toutefois, à partir d'une vitesse angulaire $\omega_1$, le couple centrifuge $M_c$ devient supérieur au couple de précontrainte $F_1$, et provoque un pivotement de l'organe mobile 3 vers l'extérieur. Selon la loi de Hooke, la force élastique $F_e$ exercée par le ressort 4 sur les deux organes mobiles 3 peut être approximée par la formule suivante :

$$F_e = kx + F_1$$

dans laquelle k est le coefficient de raideur du ressort 4 et x la distance de compression du ressort 4 à partir de la position initiale illustrée sur la figure 2A.

De son côté, la force centrifuge exercée sur chaque organe mobile 3 suit la formule suivante :

$$F_c = m\omega^2 r$$

dans laquelle m est la masse de chaque organe mobile 3, $\omega$ la vitesse angulaire de l'arbre de transmission, et r la distance radiale du centre de gravité de chaque organe mobile 3 à l'axe de rotation X.

Si les organes mobiles 3 sont sensiblement identiques, et leurs points de contact avec le ressort 4 sont à une distance radiale I du pivot P, la vitesse angulaire $\omega_1$ de déclenchement du dispositif de protection mécanique peut être calibrée suivant la formule suivante :

$$\omega_1 = \sqrt{\frac{F_1 l}{N m r_1 L}}$$

dans laquelle N représente le nombre d'organes mobiles 3 (dans le mode de réalisation illustré, N=2).

Pour obtenir une accélération radiale de l'organe mobile 3 vers l'extérieur suite au déclenchement du dispositif de protection, le coefficient de raideur k sera inférieur au quotient de la précontrainte $F_1$ divisée la position radiale initiale $r_1$ :

$$k < \frac{F_1}{r_1}$$

Comme dans les premier et deuxième modes de réalisation, afin d'éviter un déclenchement intempestif du dispositif de protection mécanique, la distance radiale $r_1$ peut correspondre à l'équation :

$$r_1 \geq \frac{K\gamma}{\omega_n^2}$$

dans laquelle $\gamma$ représente une accélération externe prédéterminée, K un coefficient de sécurité, et $\omega_n$ une vitesse angulaire nominale de l'arbre de transmission inférieure à la vitesse angulaire de déclenchement.

Les organes mobiles 3 et le ressort 4 de ce troisième mode de réalisation peuvent donc aussi être calibrées sur base de ces formules pour déclencher le dispositif de protection à une vitesse critique $\omega_1$, dépassant d'une survitesse $\Delta\omega$ prédéterminée la vitesse nominale $\omega_n$ de l'arbre de transmission 1. Suite à ce déclenchement, l'organe mobile 3 se déplace vers une deuxième position située radialement à l'extérieur de la première et illustrée sur la figure 3B.

Après le déplacement de l'organe mobile 3 jusqu'à la deuxième position, l'arbre de transmission 1 peut effectuer un maximum d'un demi tour avant que l'extrémité distale 3b d'un des deux organes mobiles 3 vienne frapper dans sa rotation autour de l'axe principal X la butée tangentielle 8. L'impact de l'extrémité distale 3b de l'organe mobile 3 contre la butée tangentielle 8 génère une surcharge instantanée en torsion de l'arbre de transmission 1 et la rupture de l'élément frangible 2, disposé axialement entre le premier organe d'accouplement 1a et l'organe mobile 3.

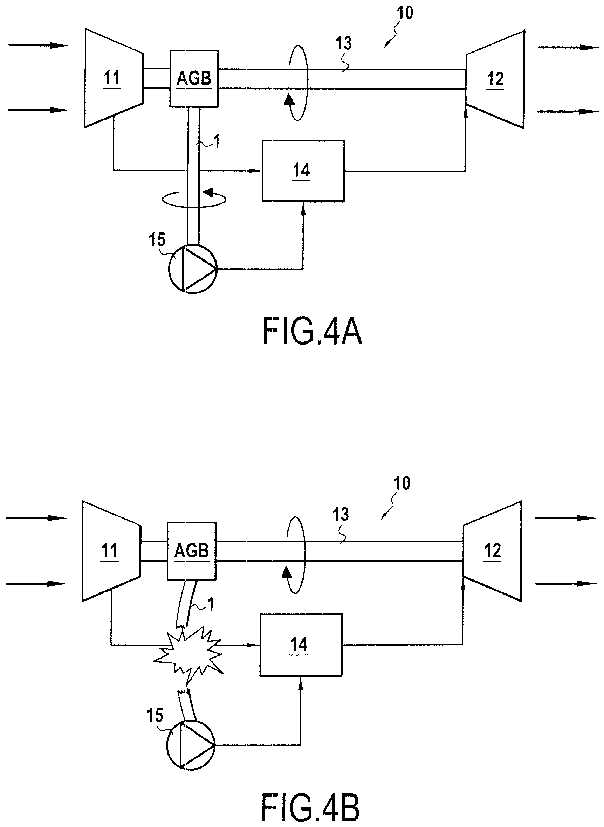

Un exemple d'application d'un dispositif de protection mécanique suivant l'un quelconque des premier à troisième modes de réalisation est illustré sur la figure 4A. Dans cet exemple, un dispositif comme ceux illustrés sur les figures précédentes est utilisé pour protéger un turbomoteur 10 contre une survitesse $\Delta\omega$. Ce turbomoteur 10 comporte un compresseur 11 et une turbine 12, reliés par un arbre moteur 13, et une chambre de combustion 14 alimentée en carburant par une pompe d'alimentation 15. L'air comprimé par le compresseur 12 est fourni à cette chambre de combustion 14, et la détente des gaz de combustion chauds dans la turbine 12 sert à actionner l'arbre moteur 13 avec un important surplus de puissance par rapport à celle requise pour actionner le compresseur 11. L'arbre moteur 13 peut ainsi être relié à d'autres dispositifs mécaniques pour leur actionnement, comme, par exemple, à un rotor d'hélicoptère.

Dans le turbomoteur 10 illustré, l'arbre de transmission 1 est couplé à l'arbre moteur 13 à travers une boite de vitesses pour accessoires AGB. L'arbre de transmission 1 est aussi couplé à la pompe d'alimentation 15 pour son actionnement. De cette manière, en fonctionnement, une puissance est dérivée de l'arbre moteur 13 à travers l'arbre de transmission 1 pour assurer l'alimentation de la chambre de combustion 14 en carburant.

Si une survitesse prédéterminée de l'arbre moteur 13 est atteinte, l'arbre de transmission 1 atteint la vitesse critique $\omega_1$ et rompt à la section frangible 2. L'actionnement de la pompe d'alimentation 15 est ainsi interrompu, comme illustré sur la figure 4B, et l'apport de carburant à la chambre de combustion 14 s'arrête. N'étant plus alimenté en carburant, le turbomoteur 10 cesse de produire une puissance d'actionnement de l'arbre moteur 13, et l'emballement de l'arbre moteur 13 est ainsi évité.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En particulier, des caractéristiques individuelles des différents modes de réalisation illustrés peuvent être combinées dans des modes de réalisation additionnels. Par conséquent, la description et les dessins doivent être considérés dans un sens illustratif plutôt que restrictif.

**Revendications**

1. Dispositif de protection mécanique comportant un arbre de transmission (1) avec un élément (2,2') frangible sous une surcharge en torsion ; **caractérisé en ce qu'**il comporte en outre au moins :

    un organe mobile (3), solidaire de l'arbre de transmission (1) en rotation autour d'un axe principal (X) et apte à se déplacer radialement vers l'extérieur par rapport à l'axe principal (X), d'une première position à une deuxième position ; un ressort (4) de contrainte de l'organe mobile (3) vers la première position ; et une butée tangentielle (8) apte à arrêter la rotation de l'organe mobile (3) autour de l'axe principal (X) quand l'organe mobile (3) est dans la deuxième position ;

    et **en ce que** l'organe mobile (3) et le ressort (4) sont calibrés pour ce que, à partir d'une vitesse angulaire de déclenchement prédéterminée, l'organe mobile (3) se déplace de la première à la deuxième position sous l'effet d'une force centrifuge supérieure à une précontrainte du ressort (4).

2. Dispositif de protection mécanique suivant la revendication 1, dans lequel l'organe mobile (3) est apte à se déplacer de la première position à la deuxième position par translation.

3. Dispositif de protection mécanique suivant la revendication 1, dans lequel l'organe mobile (3) est apte à se déplacer de la première position à la deuxième position par pivotement.

4. Machine comportant un arbre moteur (13), une pompe d'alimentation (15), et un dispositif de protection mécanique suivant une quelconque des revendications 1 ou 2, dans lequel ledit arbre de transmission (1) connecte l'arbre moteur (13) à la pompe d'alimentation (15) pour l'actionnement de ladite pompe d'alimentation (15).

5. Machine suivant la revendication 4, dans lequel ladite pompe d'alimentation (15) est une pompe d'alimentation en carburant.

6. Machine suivant la revendication 5, dans lequel ledit arbre moteur (11) est couplé à une turbine (12) configurée pour être actionnée par l'expansion d'un fluide chauffé par combustion dudit carburant.

7. Procédé de protection mécanique, comportant les étapes suivantes :

    déclenchement, à une certaine vitesse angulaire d'un arbre de transmission (1), du déplacement d'un organe mobile (3) d'une première position à une deuxième position plus extérieure radialement par rapport à l'arbre de transmission (1), sous l'effet d'une force centrifuge et contre une précontrainte élastique d'un ressort (4) de contrainte de l'organe mobile (3) en sens opposé à la force centrifuge, l'organe mobile (3) tournant avec l'arbre de transmission (1) ; contact de l'organe mobile (3) en rotation, dans la deuxième position, contre une ou plusieurs butée tangentielle (8) ; et rupture d'un élément frangible (2,2') de l'arbre de transmission (1) sous une surcharge en torsion causée par le contact de l'organe mobile (3) contre la butée tangentielle (8).

8. Procédé de protection mécanique suivant la revendication 7, dans lequel ledit arbre de transmission (1) transmet une rotation d'un arbre moteur (13) vers une pompe d'alimentation (15).

9. Procédé de protection mécanique suivant la revendication 8, dans lequel ladite pompe d'alimentation (15) alimente en carburant une combustion dont l'énergie thermique sert à faire tourner l'arbre moteur (13).

10. Procédé de protection mécanique suivant la revendication 9, dans lequel ledit arbre moteur (13) est actionné par une turbine (12), la turbine (12) étant actionnée à son tour par l'expansion d'un fluide chauffé par ladite combustion.

**Patentansprüche**

1. Mechanische Schutzvorrichtung, umfassend eine Übertragungswelle (1) mit einem unter einer Torsionsüberlastung zerbrechlichen Element (2, 2'), **dadurch gekennzeichnet, dass** sie ferner wenigstens umfasst:

    ein bewegliches Organ (3), das mit der Übertragungswelle (1) um eine Hauptachse (X) drehbar fest verbunden ist und das geeignet ist, sich gegenüber der Hauptachse (X) aus einer ersten Position in eine zweite Position radial nach außen zu bewegen,

eine Feder (4) zum Spannen des beweglichen Organs (3) in die erste Position, und
einen Tangentialanschlag (8), der geeignet ist, die Drehung des beweglichen Organs (3) um die Hauptachse (X) zu stoppen, wenn das bewegliche Organ (3) sich in der zweiten Position befindet,
und dass das bewegliche Organ (3) und die Feder (4) kalibriert sind, damit sich das bewegliche Organ (3) ab einer vorbestimmten Auslösewinkelgeschwindigkeit unter der Wirkung einer Fliehkraft, welche größer als eine Vorspannung der Feder (4) ist, aus der ersten in die zweite Position bewegt.

2. Mechanische Schutzvorrichtung nach Anspruch 1, bei der das bewegliche Organ (3) geeignet ist, sich durch Translation aus der ersten Position in die zweite Position zu bewegen.

3. Mechanische Schutzvorrichtung nach Anspruch 1, bei der das bewegliche Organ (3) geeignet ist, sich durch Verschwenken aus der ersten Position in die zweite Position zu bewegen.

4. Maschine mit einer Antriebswelle (13), einer Speisepumpe (15) und einer mechanischen Schutzvorrichtung nach einem der Ansprüche 1 oder 2, bei der die Übertragungswelle (1) die Antriebswelle (13) mit der Speisepumpe (15) zur Betätigung der Speisepumpe (15) verbindet.

5. Maschine nach Anspruch 4, bei der die Speisepumpe (15) eine Kraftstoffpumpe ist.

6. Maschine nach Anspruch 5, bei der die Antriebswelle (11) mit einer Turbine (12) gekoppelt ist, welche dazu ausgelegt ist, durch Ausdehnung eines durch Verbrennung des Kraftstoffs erhitzten Fluids betätigt zu werden.

7. Mechanisches Schutzverfahren, das die folgenden Schritte umfasst:

bei einer bestimmten Winkelgeschwindigkeit einer Übertragungswelle (1), Auslösen der Bewegung eines beweglichen Organs (3) aus einer ersten Position in eine in Bezug auf die Übertragungswelle (1) radial weiter außen gelegene zweite Position, unter der Wirkung einer Fliehkraft und gegen eine elastische Vorspannung einer Feder (4) zum Spannen des beweglichen Organs (3) in zu der Fliehkraft entgegengesetzter Richtung, wobei sich das bewegliche Organ (3) mit der Übertragungswelle (1) dreht,
Kontakt des sich drehenden beweglichen Organs (3) in der zweiten Position an einem Tangentialanschlag (8) oder mehreren und

Brechen eines zerbrechlichen Elements (2, 2') der Übertragungswelle (1) unter einer Torsionsüberlastung, die durch den Kontakt des beweglichen Organs (3) an dem Tangentialanschlag (8) hervorgerufen wird.

8. Mechanisches Schutzverfahren nach Anspruch 7, bei dem die Übertragungswelle (1) eine Drehung einer Antriebswelle (13) zu einer Speisepumpe (15) überträgt.

9. Mechanisches Schutzverfahren nach Anspruch 8, bei dem die Speisepumpe (15) eine Verbrennung, deren Wärmeenergie dazu dient, die Antriebswelle (13) zu drehen, mit Kraftstoff speist.

10. Mechanisches Schutzverfahren nach Anspruch 9, bei dem die Antriebswelle (13) durch eine Turbine (12) betätigt wird, wobei die Turbine (12) ihrerseits durch die Ausdehnung eines durch die Verbrennung erhitzten Fluids betätigt wird.

**Claims**

1. A mechanical protection device comprising a transmission shaft (1) with a frangible element (2, 2') that is breakable under a torsional overload, the device being **characterized in that** it further comprises at least:

a movable member (3) secured to the transmission shaft (1) to rotate about a main axis (X) and suitable for moving radially outwards relative to the main axis (X) from a first position to a second position;
a spring (4) urging the movable member (3) towards the first position; and
a tangential abutment (8) suitable for stopping the rotation of the movable member (3) about the main axis (X) when the movable member (3) is in the second position;
and **in that** the movable member (3) and the spring (4) are calibrated so that, from a predetermined trigger angular speed, the movable member (3) moves from the first position to the second position under the effect of centrifugal force greater than prestress of the spring (4).

2. A mechanical protection device according to claim 1, wherein the movable member (3) is suitable for moving from the first position to the second position in translation.

3. A mechanical protection device according to claim 1, wherein the movable member (3) is suitable for moving from the first position to the second position by pivoting.

4. A machine including a drive shaft (13), a feed pump (15), and a mechanical protection device according to any one of claim 1 or claim 2, wherein said transmission shaft (1) connects the drive shaft (13) to the feed pump (15) in order to actuate said feed pump (15).

5. A machine according to claim 4, wherein said feed pump (15) is a fuel feed pump.

6. A machine according to claim 5, wherein said drive shaft (13) is coupled to a turbine (12) configured to be actuated by the expansion of a fluid heated by combustion of said fuel.

7. A mechanical protection method comprising the following steps:

> at a certain angular speed of a transmission shaft (1), triggering a movement of a movable member (3) from a first position to a second position that is radially further out relative to the transmission shaft (1) under the effect of a centrifugal force and against a resilient prestress from a spring (4) urging the movable member (3) in the direction opposite to the centrifugal force, the movable member (3) rotating with the transmission shaft (1);
> in the second position, causing the rotating movable member (3) to make contact against one or more tangential abutments (8); and
> breaking a frangible element (2, 2') of the transmission shaft (1) under a torsional overload caused by the movable member (3) making contact against the tangential abutment (8).

8. A mechanical protection method according to claim 7, wherein said transmission shaft (1) transmits rotation from a drive shaft (13) to a feed pump (15).

9. A mechanical protection method according to claim 8, wherein said feed pump (15) feeds fuel to combustion delivering heat energy suitable for causing the drive shaft (13) to rotate.

10. A mechanical protection method according to claim 9, wherein said drive shaft (13) is actuated by a turbine (12), the turbine (12) being actuated in turn by the expansion of a fluid heated by said combustion.

FIG.1A

FIG.1B

FIG.1C

FIG.2

FIG.3A

FIG.3B

FIG.4A

FIG.4B

**EP 2 699 819 B1**

## RÉFÉRENCES CITÉES DANS LA DESCRIPTION

**Documents brevets cités dans la description**

- US 4313712 A
- US 6042292 A
- WO 2008101876 A
- FR 1347634 A